# EUROPEAN PATENT APPLICATION

(11) **EP 4 451 648 A1**
(43) Date of publication of application: **23.10.2024**
(21) Application number: 22923545.2
(22) Date of filing: 15.12.2022
(51) Int. Cl.: H04L 67/141

(54) **AUTHORIZATION METHOD AND APPARATUS**

(30) Priority: 29.01.2022 CN 202210112998
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Gill Jennings & Every LLP
(86) International application number: PCT/CN2022/139382
(87) International publication number: WO 2023/142759

(57) **Abstract**

This application provides an authorization method and an apparatus, and relates to the field of communication technologies. The method includes: After a core network device determines that communication authorization performed by a first authorization device on a terminal device succeeds, when the terminal device moves out of an area corresponding to the first authorization device, if the core network device determines that the terminal device moves out of an area corresponding to a second authorization device, the core network device may further request the second authorization device to re-perform communication authorization on the terminal device; and the core network device may determine, based on second authorization information of the second authorization device, of a result of communication authorization performed by the second authorization device on the terminal device. According to the foregoing method, after communication authorization performed by the first authorization device on the terminal device succeeds, if the terminal device moves out of the area corresponding to the first authorization device, the core network device may further request the second authorization device to re-perform communication authorization on the terminal device, to ensure that authorization is performed on the terminal device for a plurality of times without interrupting communication, thereby improving system efficiency.

## Description

### CROSS-REFERENCE TO RELATED APPLICATION

This application claims priority to Chinese Patent Application No. 202210112998.9, filed with the China National Intellectual Property Administration on January 29, 2022 and entitled "AUTHORIZATION METHOD AND APPARATUS", which is incorporated herein by reference in its entirety.

### TECHNICAL FIELD

This application relates to the field of communication technologies, and in particular, to an authorization method and an apparatus.

### BACKGROUND

An uncrewed aerial vehicle (uncrewed aerial vehicle, UAV) is a kind of uncrewed aircraft with autonomous power, and can perform a plurality of tasks through manual control or autonomous driving. As research and development technologies of the uncrewed aerial vehicle become mature, manufacturing costs are greatly reduced, and the uncrewed aerial vehicle is widely used in various fields, including agricultural plant protection, electric power inspection, police law enforcement, geological exploration, environmental monitoring, forest fire prevention, aerial photography for movies and television, and the like.

The uncrewed aerial vehicle and an uncrewed aerial vehicle controller (UAV controller, UAV-C) jointly form an uncrewed aerial system (uncrewed aerial system, UAS). The uncrewed aerial vehicle controller (referred to as a controller for short) commands and controls the uncrewed aerial vehicle by sending control data. A data communication link between the controller and the uncrewed aerial vehicle is referred to as a command and control (command and control, C2) link, and communication between the controller and the uncrewed aerial vehicle may also be referred to as C2 communication (C2 communication).

When the uncrewed aerial vehicle establishes a communication connection for the C2 communication, for example, establishes or modifies a session (for example, a protocol data unit (protocol data unit, PDU) session), C2 communication authorization needs to be performed. A session management function (session management function, SMF) can assist the uncrewed aerial vehicle in performing C2 communication authorization and sensing C2 communication authorization information. If authorization fails, a network does not establish the communication connection of the C2 communication for the uncrewed aerial vehicle.

Currently, when communication authorization is performed on the uncrewed aerial vehicle, it is assumed that an area for which an uncrewed aerial vehicle service supplier (UAV service supplier, USS) is responsible and that the uncrewed aerial vehicle passes through in a flight process does not change. Therefore, authorization only needs to be requested from the USS. However, a range of an area for which a single USS is responsible is limited. When the uncrewed aerial vehicle flies beyond an area for which the USS that authorizes the uncrewed aerial vehicle is responsible, the uncrewed aerial vehicle cannot continue flying, which may cause problems such as a flight accident.

### SUMMARY

This application provides an authorization method and an apparatus, to optimize a process of performing C2 communication authorization on an uncrewed aerial vehicle.

According to a first aspect, this application provides an authorization method. The method may be performed by a core network device or a module (for example, a chip) used in the core network device. The method includes: A core network device receives first authorization information from a first authorization device, and determines that communication authorization performed by the first authorization device on a terminal device succeeds; sends a request message to a second authorization device when the terminal device moves out of an area corresponding to the first authorization device, where the request message is used to request the second authorization device to perform communication authorization on the terminal device, and the second authorization device is an authorization device corresponding to an area in which the terminal device is located after the terminal device moves out of the area corresponding to the first authorization device; and receives second authorization information from the second authorization device, and determines a result of communication authorization performed by the second authorization device on the terminal device.

According to the foregoing method, after communication authorization performed by the first authorization device on the terminal device succeeds, if the terminal device moves out of the area corresponding to the first authorization device, the core network device may further request the second authorization device to re-perform communication authorization on the terminal device, to ensure that authorization is performed on the terminal device for a plurality of times without interrupting communication, thereby improving system efficiency.

In a possible implementation, the method further includes: obtaining first information from the first authorization device, where the first information indicates to re-perform communication authorization on the terminal device; and the sending a request message to a second authorization device includes: sending the request message to the second authorization device based on the first information.

By implementing the foregoing method, the first authorization device triggers, through the first information, the core network device to re-perform communication authorization on the terminal device, so that an occasion for re-performing communication authorization on the terminal device can be accurately determined, thereby improving system efficiency.

In a possible implementation, the first information is one or more of the following: information indicating to change an authorization device, information indicating that authorization of the first authorization device is invalid, or identification information of the second authorization device.

In a possible implementation, the method further includes: determining that the terminal device moves out of the area corresponding to the first authorization device.

In a possible implementation, the determining that the terminal device moves out of the area corresponding to the first authorization device includes:
obtaining location information of the terminal device; and determining, based on the location information and the area corresponding to the first authorization device, that the terminal device moves out of the area corresponding to the first authorization device.

By implementing the foregoing method, whether the terminal device moves out of the area corresponding to the first authorization device can be accurately determined through the location information of the terminal device, to avoid repeatedly performing authorization on the terminal device for a plurality of times, and reduce signaling overheads.

In a possible implementation, the determining that the terminal device moves out of the area corresponding to the first authorization device includes:
sending a request message to a mobility management device, where the request message is used to request a notification that the terminal device moves out of the area corresponding to the first authorization device; and receiving a notification message from the mobility management device, and determining, based on the notification message, that the terminal device moves out of the area corresponding to the first authorization device.

By implementing the foregoing method, it is determined, through the request message of the mobility management device, that the terminal device moves out of the area corresponding to the first authorization device, so that complexity of the core network device can be reduced, and load of the core network device can be reduced.

In a possible implementation, the method further includes: receiving, information that is from the first authorization device and that is about the area corresponding to the first authorization device.

In a possible implementation, before the sending a request message to a second authorization device, the method further includes: obtaining the identification information of the second authorization device.

In a possible implementation, the obtaining the identification information of the second authorization device includes: receiving the identification information of the second authorization device from the terminal device, the first authorization device, or a data management network element; or obtaining the location information of the terminal device, and obtaining the identification information of the second authorization device based on the location information of the terminal device and information about an area corresponding to one or more authorization devices.

By implementing the foregoing method, the second authorization device is determined through the terminal device, the first authorization device, or the data management network element, so that the second authorization device can be determined in a timely manner, thereby improving communication authorization efficiency of the terminal device.

In a possible implementation, the method is performed by a network exposure function device, and the method further includes: When the second authorization information indicates that authorization fails, the network exposure function device sends, to a session management device, information indicating that communication authorization performed by the second authorization device on the terminal device fails.

In a possible implementation, the method is performed by the session management device, and the method further includes: establishing a session for the terminal device based on the first authorization information.

In a possible implementation, the method further includes: when the second authorization information indicates that authorization fails, releasing the session established for the terminal device based on the first authorization information.

By implementing the foregoing method, when the second authorization information indicates that authorization fails, the session of the terminal device is released, so that the terminal device may not perform a behavior beyond permission of the terminal device, to improve system security.

According to a second aspect, this application provides an authorization method. The method may be performed by a first authorization device or a module (for example, a chip) used in the first authorization device. The method includes: A first authorization device sends authorization information to a core network device, where the authorization information indicates a result of communication authorization performed by the first authorization device on a terminal device; and sends first information to the core network device when the terminal device moves out of an area corresponding to the first authorization device, where the first information indicates to re-perform communication authorization on the terminal device.

In a possible implementation, the first information is one or more of the following: information indicating to change an authorization device, information indicating that authorization of the first authorization device is invalid, or identification information of a second authorization device, where the second authorization device is an authorization device corresponding to an area in which the terminal device is located after the terminal device moves out of the area corresponding to the first authorization device.

In a possible implementation, when the first information is the identification information of the second authorization device, the method further includes: obtaining location information of the terminal device; and obtaining the identification information of the second authorization device based on the location information of the terminal device and information about an area corresponding to one or more authorization devices.

In a possible implementation, the method further includes: obtaining location information of the terminal device; and determining, based on the location information and information about the area corresponding to the first authorization device, that the terminal device moves out of the area corresponding to the first authorization device; or receiving a notification message from the mobility management device, and determining, based on the notification message, that the terminal device moves out of the area corresponding to the first authorization device.

In a possible implementation, before the sending first information to the core network device, the method further includes: determining that communication authorization performed on the terminal device succeeds.

According to a third aspect, this application provides an authorization method. The method may be performed by a core network device or a module (for example, a chip) used in the core network device. The method includes: when a moving route of a terminal device passes through an area corresponding to a first authorization device and an area corresponding to a second authorization device, obtaining identification information of the first authorization device; sending a first request message to the first authorization device, where the first request message is used to request the first authorization device to perform communication authorization on the terminal device; obtaining the identification information of the second authorization device; sending a second request message to the second authorization device, where the first request message is used to request the second authorization device to perform communication authorization on the terminal device; receiving first authorization information from the first authorization device, and receiving second authorization information from the second authorization device, where the first authorization information indicates a result of communication authorization performed by the first authorization device on the terminal device, and the second authorization information indicates a result of communication authorization performed by the second authorization device on the terminal device; and determining an authorization result based on the first authorization information and the second authorization information.

By implementing the foregoing method, when the moving route of the terminal device passes through areas corresponding to the plurality of authorization devices, the core network device may request the plurality of authorization devices to perform communication authorization on the terminal device, and when authorization performed by the plurality of authorization devices all succeeds, establish a session for the terminal device, so that authorization is performed on the terminal device for a plurality of times, thereby reducing signaling overheads and improving system efficiency.

In a possible implementation, the identification information of the first authorization device and the identification information of the second authorization device are from the terminal device.

In a possible implementation, the obtaining the identification information of the second authorization device includes: receiving the identification information of the second authorization device from the first authorization device.

By implementing the foregoing method, the first authorization device directly sends the identification information of the second authorization device to the core network device, so that the core network device can determine the second authorization device in a timely manner, thereby improving communication authorization efficiency of the terminal device.

In a possible implementation, the obtaining the identification information of the second authorization device includes: receiving first indication information from the first authorization device, where the first indication information indicates that another authorization device is needed to perform communication authorization on the terminal device or indicates that the first authorization device is incapable of independently performing communication authorization on the terminal device; and obtaining the identification information of the second authorization device based on the first indication information.

By implementing the foregoing method, the first indication information indicates that the terminal device further needs communication authorization from another authorization device, so that the second authorization device can be determined in a timely manner based on the first indication information, to improve communication authorization efficiency of the terminal device.

In a possible implementation, the obtaining the identification information of the second authorization device based on the first indication information includes: requesting identification information of the another authorization device from the terminal device or a data management device based on the first indication information; and receiving the identification information of the second authorization device from the terminal device or the data management device.

In a possible implementation, the determining an authorization result based on the first authorization information and the second authorization information includes:
determining that communication authorization performed on the terminal device succeeds, if the first authorization information indicates that authorization succeeds, and the second authorization information indicates that authorization succeeds; or determining that communication authorization performed on the terminal device fails, if the first authorization information indicates that authorization fails, or the second authorization information indicates that authorization fails.

In a possible implementation, the determining that communication authorization performed on the terminal device succeeds includes: receiving a session establishment request of the terminal device; and the determining that communication authorization performed on the terminal device fails includes: rejecting the session establishment request of the terminal device.

In a possible implementation, the method further includes: when determining that communication authorization performed on the terminal device succeeds, sending, to a session management network element, information indicating that authorization performed on the terminal device succeeds; and when determining that authorization performed on the terminal device fails, sending, to the session management network element, information indicating that authorization performed on the terminal device fails.

In a possible implementation, when determining that authorization performed on the terminal device fails, identification information of an authorization device whose authorization on the terminal device fails is sent to the terminal device.

By implementing the foregoing method, the terminal device may determine the authorization device whose authorization fails, and the terminal device may determine, based on an actual situation, whether to change a moving route, to avoid an area corresponding to the authorization device whose authorization fails.

According to a fourth aspect, this application provides an authorization method. The method may be performed by a first authorization device or a module (for example, a chip) used in the first authorization device. The method includes: A first authorization device receives a request message from a core network device, where the request message is used to request to perform communication authorization on a terminal device, and the request message includes information about a moving route of the terminal device; and when the moving route of the terminal device passes through areas corresponding to a plurality of authorization devices, the first authorization device sends authorization information and first indication information or identification information of a second authorization device in the plurality of authorization devices to the core network device, where the authorization information indicates a result of communication authorization performed by the first authorization device on the terminal device, and the first indication information indicates that the terminal device needs authorization from another authorization device or indicates that the first authorization device is incapable of independently performing communication authorization on the terminal device.

In a possible implementation, when the authorization information indicates that authorization succeeds, the first indication information or the identification information of the second authorization device is sent to the core network device.

According to a fifth aspect, this application provides an authorization method. The method may be performed by a terminal device or a module (for example, a chip) used in the terminal device. The method includes: A terminal device determines that a moving route of the terminal device passes through an area corresponding to a first authorization device and an area corresponding to a second authorization device; and the terminal device sends a session establishment request message to a core network device, where the session establishment request message is used to request to establish a session for the terminal device, and the session establishment request message includes identification information of the first authorization device and identification information of the second authorization device.

By implementing the foregoing method, when determining that the moving route of the terminal device passes through areas corresponding to a plurality of authorization devices, the terminal device may request the plurality of authorization devices to perform communication authorization on the terminal device, so that the terminal device requests, through one message, the plurality of authorization devices to perform communication authorization, to reduce signaling overheads and improve system efficiency.

In a possible implementation, the method further includes: The terminal device receives authorization result information from the core network device if authorization performed by the first authorization device or the second authorization device on the terminal device fails, where the authorization result information indicates an authorization device whose communication authorization on the terminal device fails.

According to a sixth aspect, this application further provides a communication apparatus. The communication apparatus can implement any method or any implementation provided in any one of the first aspect to the fifth aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus may be an authorization device, a terminal device, or a core network device.

In a possible implementation, the communication apparatus includes a processor. The processor is configured to support the communication apparatus in performing the method according to the first aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the foregoing method examples. For details, refer to the descriptions in any one of the first aspect to the fifth aspect. Details are not described herein again.

According to a seventh aspect, an embodiment of this application provides a computer-readable storage medium. The computer storage medium stores computer-readable instructions; and when a computer reads and executes the computer-readable instructions, the computer is enabled to implement the method according to any one of the possible designs of the first aspect to the fifth aspect.

According to an eighth aspect, an embodiment of this application provides a computer program product. When a computer reads and executes the computer program product, the computer is enabled to implement the method according to any one of the possible designs of the first aspect to the third aspect.

According to a ninth aspect, an embodiment of this application provides a chip. The chip includes a processor, and the processor is coupled to a memory, and is configured to read and execute a software program stored in the memory, to implement the method according to any one of the possible designs of the first aspect to the fifth aspect.

According to a tenth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the possible designs of the first aspect to the fifth aspect via a logic circuit or by executing a computer program or instructions.

According to an eleventh aspect, a communication apparatus is provided. The communication apparatus includes a processor and a memory. The processor is coupled to the memory, and is configured to execute a computer program or instructions stored in the memory, to enable the communication apparatus to implement the method according to any one of the possible designs of the first aspect to the fifth aspect.

According to a twelfth aspect, a chip is provided. The chip includes a processor, may further include a memory, and is configured to execute a computer program or instructions stored in the memory, to enable a chip system to implement the method according to any one of the possible designs of the first aspect to the fifth aspect.

According to a thirteenth aspect, a communication system is provided. The system includes an apparatus for implementing the first aspect and an apparatus for implementing the second aspect.

According to a fourteenth aspect, a communication system is provided. The system includes an apparatus for implementing the third aspect, an apparatus for implementing the fourth aspect, and an apparatus for implementing the fifth aspect.

These aspects or another aspect of this application is clearer and more comprehensible in descriptions of the following embodiments.

### BRIEF DESCRIPTION OF DRAWINGS

FIG. 1 is a diagram of a 5G network architecture applicable to this application;
FIG. 2 is a diagram of movement of an uncrewed aerial vehicle according to an embodiment of this application;
FIG. 3 is a schematic flowchart of an authorization method according to an embodiment of this application;
FIG. 4 is a schematic flowchart of an authorization method according to an embodiment of this application;
FIG. 5 is a schematic flowchart of an authorization method according to an embodiment of this application;
FIG. 6 is a schematic flowchart of an authorization method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

The following describes in detail embodiments of this application with reference to the accompanying drawings of the specification.

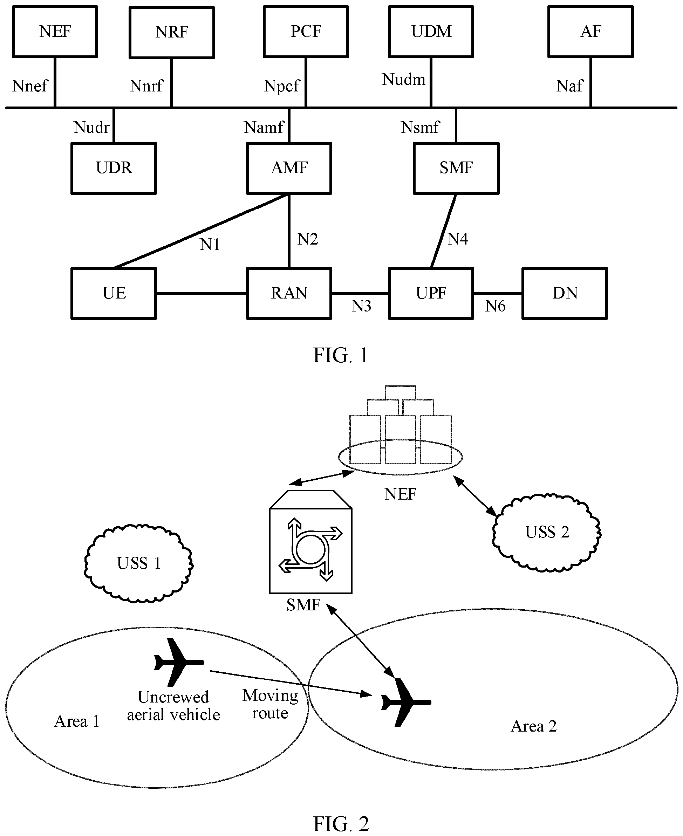

FIG. 1 is a diagram of a 5^{th} generation (5^{th} generation, 5G) network architecture that is based on a service-based architecture. The 5G network architecture shown in FIG. 1 may include three parts: a terminal device, a data network (data network, DN), and an operator network. The following briefly describes functions of some network elements in the 5G network architecture.

The operator network may include one or more of the following network elements: a network exposure function (network exposure function, NEF) network element, a policy control function (policy control function, PCF) network element, a unified data management (unified data management, UDM) network element, a network repository function (Network Repository Function, NRF) network element, an application function (application function, AF) network element, an access and mobility management function (access and mobility management function, AMF) network element, a session management function (session management function, SMF) network element, a radio access network (radio access network, RAN), a unified data repository (unified data repository, UDR) network element, a user plane function (user plane function, UPF) network element, and the like. In the foregoing operator network, a part other than a radio access network part may be referred to as a core network part.

The network element included in FIG. 1 is merely an example, and may further include another network element. For example, the network element may further include a gateway mobile location center (gateway mobile location center, GMLC). The GMLC is mainly configured to open a positioning service to an external client or the AF network element.

In FIG. 1, Nnef, Nnrf, Npcf, Nudm, Naf, Namf, Nsmf, Nudr, N1, N2, N3, N4, and N6 are interface sequence numbers. For meanings of these interface sequence numbers, refer to meanings defined in the 3^{rd} generation partnership project (3^{rd} generation partnership project, 3GPP) standard protocol. This is not limited herein.

The user equipment (user equipment, UE), the RAN, the UPF, and the DN in FIG. 1 are generally referred to as data plane network functions and entities. Data traffic of the UE may be transmitted through a PDU session established between the UE and the DN, and the transmission may pass through two network function entities: the RAN and the UPF. Other parts are referred to as control plane network functions and entities, and are mainly responsible for functions such as authentication and authorization, registration management, session management, mobility management, and policy control, to implement reliable and stable transmission of user layer traffic.

The user equipment in this application may also be referred to as a terminal device, is a device having a wireless transceiver function, and may be deployed on land, where the deployment includes indoor or outdoor, or handheld or vehicle-mounted deployment, may be deployed on water (for example, on a ship), or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal (for example, a remote control and an uncrewed aerial vehicle) in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device in this application mainly relates to the remote control and the uncrewed aerial vehicle.

The terminal device may establish a connection to the operator network through an interface (for example, N1) provided by the operator network, and use a service such as data and/or voice provided by the operator network. The terminal device may further access the DN through the operator network, and use an operator service deployed on the DN and/or a service provided by a third party. The third party may be a service party except the operator network and the terminal device, and may provide a service such as data and/or voice for the terminal device. A specific representation form of the third party may be specifically determined based on an actual application scenario, and is not limited herein.

The RAN is a subnet of the operator network, and is an implementation system between a service node in the operator network and the terminal device. To access the operator network, the terminal device is first connected to the RAN, and then may be connected to the service node in the operator network through the RAN. The RAN device in this application is a device that provides a wireless communication function for the terminal device, and the RAN device is also referred to as an access network device. The RAN device in this application includes but is not limited to a next-generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like.

A user plane network element, serving as an interface with a data network, completes functions such as user plane data forwarding, charging statistics based on a session/a flow level, and bandwidth limiting, to be specific, packet routing and forwarding, quality of service (quality of service, QoS) processing on user plane data, or the like. In a 5G communication system, the user plane network element may be a UPF network element.

A mobility management network element is mainly used for mobility management, access management, and the like. In the 5G communication system, the mobility management network element may be an AMF network element, which mainly performs functions such as mobility management and access authentication/authorization. In addition, the AMF network element is further responsible for transmitting a user policy between a terminal and a PCF network element.

A session management network element is mainly configured to: manage a session, allocate and manage an internet protocol (internet protocol, IP) address of the user equipment, select an endpoint that can manage a user plane function interface and a policy control and charging function interface, perform downlink data notification, and the like.

In the 5G communication system, the session management network element may be an SMF network element, and completes IP address allocation to the terminal, UPF selection, charging and QoS policy control, and the like.

A data network provides an operator service, internet access, or a third-party service, including a server. Video source encoding and rendering are implemented on the server side. In the 5G communication system, the data network may be a data network (data network, DN). The data network is a network located outside the operator network. The operator network may access a plurality of DNs, and a plurality of services may be deployed on the DN, to provide services such as data and/or a voice for the terminal device. For example, the DN is a private network of a smart factory, a sensor mounted in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

Unified data management network element: In the 5G communication system, the unified data management network element may be a UDM network element, and is configured to store user data, such as subscription information and authentication/authorization information.

Unified data management network element: In the 5G communication system, the policy control network element may be a UDR network element, which provides storage and retrieves subscription data. For example, the UDR network element stores and retrieves policy data for a PCF, stores and retrieves structured data, and stores application data of an NEF.

Network exposure network element: In the 5G communication system, the policy control network element may be an NEF network element, and is mainly configured to support capability and event exposure. In this application, the NEF may be alternatively replaced with a UAS network function (network function) network element, and is mainly configured to provide the capability and event exposure for a USS, including uncrewed aerial vehicle authentication or authorization, C2 communication authorization, UAV moving route authorization, QoS control for C2 communication, location reporting, and the like. Specifically, an independent NEF network element may be deployed to provide a function of the UAS NF network element.

Application network element: In the 5G communication system, the policy control network element may be an AF network element, and is responsible for providing a service for a 3^{rd} generation partnership project (3^{rd} generation partnership project, 3GPP) network, for example, affecting service routing, interacting with the PCF to perform policy control, and the like. In this application, the USS may be used as the AF network element.

Policy control network element: In the 5G communication system, the policy control network element may be a PCF network element, and is responsible for providing a policy, such as a quality of service (Quality of Service, QoS) policy and a slice selection policy, for the AMF and the SMF.

Network function repository function network element: In the 5G communication system, the policy control network element may be the NRF network element, and provides a network capability and an event exposure capability for a third-party entity, for example, an application function, edge computing, and an expected behavior of the terminal device.

In this application, the network element may also be referred to as a device. For example, the AMF network element may be referred to as an AMF device, and the SMF network element may be referred to as an SMF device. Details are not described herein again.

Currently, when the uncrewed aerial vehicle requests to establish a communication connection (establish or modify a session) for the C2 communication, the USS needs to perform C2 communication authorization. The C2 communication authorization includes UAV pairing authorization and/or UAV moving route authorization. The UAV pairing authorization indicates that the UAV is authorized to be controlled and commanded by a specific controller, and the UAV moving route authorization indicates that the UAV is authorized to fly based on a specific moving route.

In this application, the SMF may assist the uncrewed aerial vehicle in performing C2 communication authorization, and sense C2 communication authorization information. If authorization fails, a network does not establish the communication connection of the C2 communication for the uncrewed aerial vehicle. Because one USS is responsible for only one area, when the uncrewed aerial vehicle flies in one area, C2 communication authorization needs to be performed on the uncrewed aerial vehicle only through a USS corresponding to the area. If the uncrewed aerial vehicle moves to an area of another USS, a session can be further established only after C2 communication authorization is performed through a USS corresponding to the area. For example, as shown in FIG. 2, after a USS 1 performs C2 communication authorization on an uncrewed aerial vehicle, the uncrewed aerial vehicle moves in an area 1 corresponding to the USS 1. When the uncrewed aerial vehicle moves along a moving route to an area 2 corresponding to a USS 2, in the area 2, if the uncrewed aerial vehicle needs to continue performing C2 communication, the USS 2 needs to perform C2 communication authorization on the uncrewed aerial vehicle.

When the uncrewed aerial vehicle passes through areas for which a plurality of uncrewed aerial vehicle service suppliers (UAV service suppliers, USSs) are responsible in a flight process, this application provides a method, to improve authorization efficiency of performing C2 communication authorization on the uncrewed aerial vehicle, thereby improving system efficiency.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more.

In the descriptions of this application, words such as "first" and "second" are merely used for distinguishing between descriptions, and cannot be understood as an indication or implication of relative importance, or cannot be understood as an indication of implication of an order.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

One authorization device may be responsible for one flight management area of the uncrewed aerial vehicle. A size and a location of the area may be configured based on an actual situation. This is not limited in this application. In this application, the area for which the authorization device is responsible may be referred to as the area corresponding to the authorization device. The authorization device may be an AF device, and a related function of the USS may be deployed in the AF device.

In this application, a plurality of authorization devices may perform communication authorization on a terminal device in a plurality of implementations. In the following descriptions, the terminal device may be the uncrewed aerial vehicle, and a core network device may be an SMF or an NEF. The following separately provides descriptions in different implementations.

### Implementation 1

In Implementation 1 of this application, the terminal device first establishes a communication connection, for example, a user plane session, for C2 communication through the core network device. In a process of establishing the user plane session, the core network device requests a first authorization device to perform authorization on the C2 communication of the terminal device. After authorization succeeds, the core network device establishes a session for the terminal device. When determining, based on location information of the terminal device and a management area of the first authorization device, that the terminal device moves to an area out of the management area of the first authorization device, the first authorization device indicates the core network device (the SMF or the NEF) to replace the authorization device or indicates that authorization fails. Therefore, the core network device re-performs communication authorization on the terminal device through a second authorization device. For details, refer to descriptions in the following procedure.

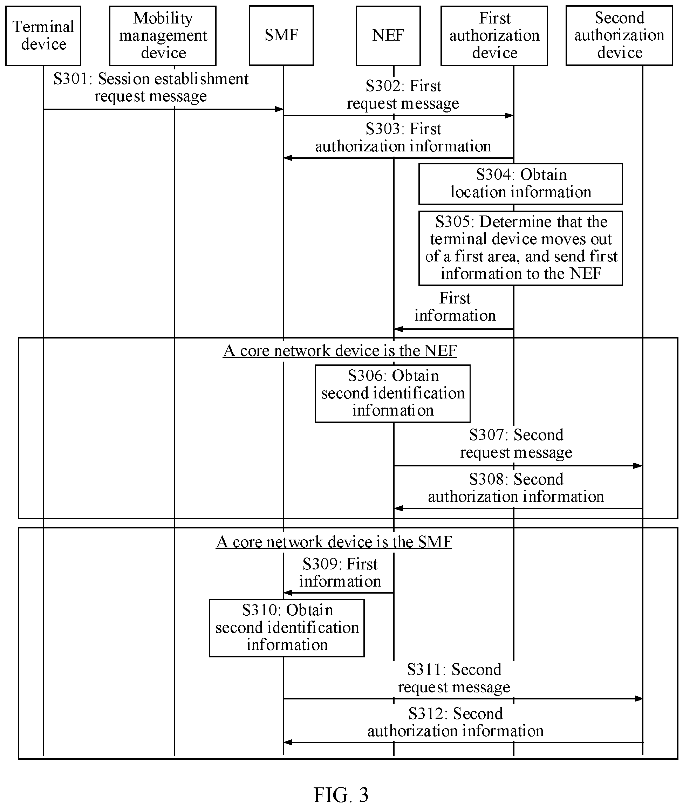

FIG. 3 is a schematic flowchart of an authorization method according to an embodiment of this application.

S301: A terminal device sends a session establishment request message or a session modification request message to an SMF, where the session establishment request message may be used to request to establish a session, and the session modification request message may be used to request to modify the session.

The session that the terminal device requests to establish or modify may be a user plane session, for example, a PDU session. The session establishment request or the session modification request message may include at least one of the following information:
identification information of a first authorization device; a C2 aviation payload (C2 aviation payload); and an identifier of the terminal device.

The terminal device may determine, based on current location information of the terminal device, that the terminal device is located in an area (referred to as a first area) corresponding to the first authorization device, so that the identification information of the first authorization device may be carried in the session establishment or modification request message. The identification information of the first authorization device may be an internet protocol (internet protocol, IP) address or a fully qualified domain name (fully qualified domain name, FQDN) of the first authorization device.

The C2 aviation payload may include at least one of UAV pairing (UAV pairing) information and flight authorization information (flight authorization information). The UAV pairing may include identification information of a controller. The controller may be configured to control the terminal device to move. The identification information of the controller may be a civil aviation administration (civil aviation administration, CAA)-level (level) uncrewed aerial vehicle identifier (identifier, ID), an IP address, a subscription permanent identifier (subscription permanent identifier, SUPI), a subscription concealed identifier (subscription concealed identifier, SUCI), a generic public subscription identifier (generic public subscription identifier, GPSI), or the like of the controller. The flight authorization information includes moving route information, and the moving route information may indicate at least one of a flight route, a flight start location, and a flight end location of the terminal device.

The identifier of the terminal device may be a CAA-level UAV ID of the terminal device. The CAA-level UAV ID is allocated by a USS to the terminal device and preconfigured in the terminal device. The CAA-level UAV ID is used to uniquely identify one uncrewed aerial vehicle, and is used for remote identification and tracking of the uncrewed aerial vehicle. The terminal device may include a plurality of CAA-level UAV IDs. One CAA-level UAV ID may be associated with one or more authorization devices. An association relationship may be configured by the SMF, or may be configured by another device.

In this application, the identification information of the first authorization device may alternatively be information carried in one specific field in the CAA-level UAV ID of the terminal device.

When the terminal device is located in the first area corresponding to the first authorization device, the CAA-level UAV ID of the terminal device included in the session establishment or modification request message may be allocated by the first authorization device to the terminal device.

S302: The SMF sends a first request message to the first authorization device.

This step may alternatively be replaced with that the SMF sends at least one of the following information to the first authorization device: the identification information of the first authorization device; the C2 aviation payload (C2 aviation payload); and the identifier of the terminal device.

The first request message is used to request to perform communication authorization on the terminal device, and may be specifically used to request to perform C2 communication authorization on the terminal device. The first request message may include at least one of the identification information of the first authorization device, the C2 aviation payload, and the identifier of the terminal device. A specific name of the first request message is not limited, may be an authorization request (Authorization Request) message, or may be another name.

In this application, a message between the SMF and the first authorization device or a second authorization device may be forwarded through an NEF. In an example of the first request message, the SMF first sends the first request message to the NEF, and then the NEF forwards message content of the first request message to the first authorization device. To accurately enable the NEF to forward the message content of the first request message to the first authorization device, the SMF may indicate address information of the first authorization device to the NEF, and the NEF may send the message content of the first request message to the first authorization device through the address information.

After the NEF obtains the first request message, if the identification information of the first authorization device in the first request message is an IP address or an FQDN of the first authorization device, the NEF may use the identification information of the first authorization device as the address information of the first authorization device. If the identification information of the first authorization device in the first request message is the information carried in one specific field in the CAA-level UAV ID of the terminal device, an association relationship between identification information of different authorization devices and address information of different authorization devices may be preconfigured in the NEF, and the NEF may use address information that has an association relationship with the identification information of the first authorization device as the address information of the first authorization device.

In an implementation, after determining the address information of the first authorization device, the NEF may forward at least one of the C2 aviation payload and the identifier of the terminal device in the first request message to the first authorization device.

S303: The first authorization device sends first authorization information to the SMF.

The first authorization information indicates a result of communication authorization performed by the first authorization device on the terminal device. Specifically, the first authorization information may indicate that communication authorization performed by the first authorization device on the terminal device succeeds or that authorization fails. Correspondingly, the SMF determines the result of communication authorization performed by the first authorization device on the terminal device.

In this application, factors based on which the first authorization device specifically determines whether authorization succeeds are not limited in this application. For example, in an implementation, the first authorization device may perform authorization based on whether the terminal device is allowed to communicate with a UAV-C paired with the terminal device and whether the terminal device can fly on a requested moving route. If the terminal device is allowed to communicate with the UAV-C, and the terminal device can fly on the requested moving route, the first authorization device may indicate, through the first authorization information, that authorization succeeds. If the terminal device is not allowed to communicate with the UAV-C, or the terminal device cannot fly on the requested moving route, the first authorization device may indicate, through the first authorization information, that authorization fails.

In another implementation, the first authorization device may perform authorization based only on whether the terminal device is allowed to communicate with a UAV-C paired with the terminal device, without considering whether the terminal device can fly on a requested moving route. If the terminal device is allowed to communicate with the UAV-C, the first authorization device may indicate, through the first authorization information, that authorization succeeds. If the terminal device is not allowed to communicate with the UAV-C, the first authorization device may indicate, through the first authorization information, that authorization fails.

If authorization is to be performed based on whether the terminal device can fly on the requested moving route, the terminal device may initiate an authorization procedure again. The authorization procedure may be parallel to and independent of a procedure of authorization based on whether the terminal device is allowed to communicate with the controller UAV-C paired with the terminal device. For a specific process of the authorization procedure of the moving route, refer to any one of Implementation 1 to Implementation 4 in this application.

In another implementation, the first authorization device may perform authorization based only on whether the terminal device can fly on a requested moving route, without considering whether the terminal device is allowed to communicate with a UAV-C paired with the terminal device. If the terminal device can fly on the requested moving route, the first authorization device may indicate, through the first authorization information, that authorization succeeds. If the terminal device cannot fly on the requested moving route, the first authorization device may indicate, through the first authorization information, that authorization fails.

If authorization is to be performed based on whether the terminal device is allowed to communicate with the UAV-C paired with the terminal device, the terminal device may initiate an authorization procedure again, where the authorization procedure may be parallel to and independent of a moving route authorization procedure of the terminal device.

The first authorization device may send the first authorization information to the SMF through the NEF. For example, the first authorization device may send a first authorization response message to the SMF. The first authorization response message includes the first authorization information, and the NEF forwards the first authorization information in the first authorization response message to the SMF. For another example, the first authorization device sends the first authorization information to the NEF, and the NEF forwards the first authorization information to the SMF. After receiving the first authorization information, the NEF may further store the first authorization information, and the SMF may further store the first authorization information.

After obtaining the first authorization information, the SMF may perform communication authorization on the terminal device based on the first authorization information. Specifically, if the first authorization information indicates that authorization succeeds, the SMF establishes a session for the terminal device. An example in which the session that is to be established is the PDU session is used, and an establishment process may include the following steps.

Step 1: The SMF selects a PCF for the terminal device, and the SMF requests a policy rule from the PCF.

Step 2: The SMF selects a UPF for the terminal device, and selects the UPF for the terminal device.

Step 3: The SMF reports session-related information (such as an IP address/prefix of the terminal device and a reporting trigger status) to the PCF.

Step 4: The SMF sends tunnel information, packet detection rule information, execution rule information, reporting rule information, and the like, to the UPF.

Step 5: The SMF sends a PDU session identifier, N2 session management information (N2 session management Information, N2 SM Information), and an N1 SM container (container) to an AMF. The N2 SM information is sent to a RAN, and is forwarded by the AMF to the RAN. The N1 SM container includes allocated IP address information. The allocated IP address information is sent to the terminal device, and is forwarded by the RAN and the AMF to the terminal device.

Step 6: The AMF sends an N2 PDU session request to the RAN, where the N2 PDU session request includes the N2 SM information and the N1 SM container. The N1 SM container includes the allocated IP address information.

Step 7: The RAN forwards the N1 SM container in step 6, and the terminal device receives the N1 SM container sent by a network side.

The establishment of the PDU session may be completed through the foregoing process. The process of establishing the PDU session may further include another procedure. For a specific process, refer to descriptions in an existing standard. Details are not described herein again.

If the first authorization information indicates that authorization fails, the SMF may reject the establishment of the PDU session for the terminal device, that is, reject the establishment of the session.

Optionally, the first authorization device may further determine, based on the moving route information in the C2 aviation payload, whether a moving route of the terminal device passes through an area corresponding to another authorization device. For example, if the first authorization device determines that the moving route of the terminal device passes through a second area corresponding to the second authorization device, the first authorization device may further interact with the second authorization device, and determine, based on a result of communication authorization performed by the second authorization device on the terminal device, a result of communication authorization performed by the first authorization device on the terminal device. For example, when determining that communication authorization performed by the second authorization device on the terminal device succeeds, the first authorization device may indicate, through the first authorization information, that authorization succeeds.

In this application, if the first authorization information indicates that authorization fails, the first authorization device may perform a procedure of rejecting the establishment of the session with a device such as the SMF. A specific process is not described again. If the first authorization information indicates that authorization succeeds, to be specific, when the first authorization device agrees to perform communication authorization on the terminal device, the first authorization device may further perform S304 and S305.

S304: The first authorization device obtains the location information of the terminal device.

The first authorization device may obtain the location information of the terminal device in a plurality of manners.

In a first implementation, the first authorization device may subscribe to the location information of the terminal device from a network, for example, subscribe to the location information of the terminal device from the AMF or a GMLC. The AMF or the GMLC may periodically send the location information of the terminal device to the first authorization device.

In a second implementation, the terminal device may actively report the location information to the first authorization device. For example, the terminal device periodically reports the location information to the first authorization device through an application layer.

In this application, the location information of the terminal device may be longitude and latitude coordinates of the terminal device, or may be location information of another type.

The foregoing is merely an example. The first authorization device may alternatively obtain the location information of the terminal device in another manner. Details are not described herein again.

S305: The first authorization device sends first information to the NEF when determining that the terminal device moves out of the first area corresponding to the first authorization device.

The first information may indicate to re-perform communication authorization on the terminal device, or the first information may indicate to re-perform C2 communication authorization on the terminal device.

In a first possible implementation, the first information may include information indicating to change the authorization device, or the first information may indicate to change the authorization device. Alternatively, the first information may indicate to change the authorization device, or indicate information about changing the authorization device.

In a second possible implementation, the first information includes information indicating that authorization of the first authorization device is invalid, or the first information may indicate that authorization of the first authorization device is invalid.

Optionally, the first information may further indicate a reason why authorization is invalid (where the reason why authorization is invalid may also be referred to as a reason for re-performing communication authorization). For example, the reason why authorization is invalid is that the terminal device moves out of the first area.

In a third possible implementation, the first information includes identification information of the second authorization device, or the first information is identification information of the second authorization device. The first authorization device may obtain or preconfigure areas corresponding to a plurality of authorization devices. Therefore, the first authorization device may determine the second authorization device based on the location information of the terminal device. An area in which the terminal device is located after the terminal device moves out of the first area is the second area corresponding to the second authorization device. For specific content of the identification information of the second authorization device, refer to descriptions of the identification information of the first authorization device. Details are not described herein again.

In other words, the information indicating to change the authorization device, the information indicating that authorization is invalid, and the information including the identification information of the second authorization device may all be understood as the first information indicating to re-perform communication authorization on the terminal device. It may be understood that, any information that can enable the NEF (or the SMF) to determine that authorization is re-performed on the terminal device (that is, an authorization request is initiated to the second authorization device) may be referred to as the first information in this application.

The first information may further indicate other information, for example, indicate the identifier of the terminal device. This is not limited in this application.

How the first authorization device specifically determines that the terminal device moves out of the first area is not limited in this application. For example, in a first implementation, the first authorization device may obtain the location information of the terminal device, to determine, based on the location information of the terminal device and the first area, that the terminal device moves out of the first area.

In a second implementation, the first authorization device may send a subscription request message (or a notification message for requesting the terminal device to move out of the first area) to a mobility management device, where the subscription request message is used to subscribe to a notification that the terminal device moves out of the first area; and when receiving a notification message from the mobility management device, the first authorization device may determine, based on the notification message, that the terminal device moves out of the first area, where the notification message may indicate that the terminal device moves out of the first area.

The mobility management device may be the AMF, a gateway mobile location center (gateway mobile location center, GLMC) device, or the like. This is not limited in this application.

In a third implementation, when the terminal device moves out of the first area, the mobility management device actively sends a notification message to the first authorization device, and the first authorization device may determine, based on the notification message, that the terminal device moves out of the first area.

In addition, the first information may be carried in a message such as an authorization notification message, a re-authorization request message, or a USS replacement request message. This is not limited in this application.

Step S305 may be further replaced with the following: The first authorization device determines that the terminal device moves to an edge of the first area corresponding to the first authorization device, or the first authorization device determines that the terminal device is about to move out of the first area corresponding to the first authorization device, and the first authorization device sends the first information to the NEF.

Specifically, the first authorization device may determine, based on the location information of the terminal device and information about the first area, that the terminal device moves to the edge of the first area corresponding to the first authorization device, or that the terminal device is about to move out of the first area corresponding to the first authorization device, where the information about the first area may indicate the first area corresponding to the first authorization device.

As described above, in this application, a core network device may be the NEF or the SMF. When the core network device is the NEF, the core network device may perform S306 to S308.

Optionally, S306: The NEF obtains the identification information of the second authorization device.

If the first information indicates the identification information of the second authorization device, S306 may not be performed.

If the first information does not indicate the identification information of the second authorization device, the NEF may obtain the identification information of the second authorization device in any one of the following manners.

In a first implementation, the NEF may request the identification information of the second authorization device from the terminal device, to obtain the identification information of the second authorization device from the terminal device. Specifically, the NEF may request, through the SMF, the terminal device to obtain the identification information of the second authorization device, and the terminal device determines the second authorization device based on the location information of the terminal device, to provide the identification information of the second authorization device.

In a second implementation, the NEF obtains or preconfigures correspondences between different authorization devices and different areas (in other words, between identification information of the authorization device and information about an area corresponding to the authorization device). The NEF may obtain the location information of the terminal device from the mobility management device, and obtain the identification information of the second authorization device based on the location information of the terminal device and information about an area corresponding to the one or more authorization devices, where the one or more authorization devices include the second authorization device. Specifically, the SMF determines, based on the location information of the terminal device, an area in which the terminal device is located. In the area corresponding to the one or more authorization devices, if it is determined that the terminal device is located in the second area corresponding to the second authorization device, the NEF may determine the identification information of the second authorization device. The NEF may obtain the correspondences between the different authorization devices and the different areas from the first authorization device, a UDM device, or a UDR device.

In a third implementation, the NEF obtains or preconfigures correspondences between different authorization devices and different areas, and the NEF obtains the identifier (which may be obtained through S301 or obtained through the first information) of the terminal device. The identifier may be the CAA-level UAV ID of the terminal device, and the NEF obtains the location information of the terminal device from the mobility management device. The NEF may determine the identification information of the second authorization device based on an area corresponding to an authorization device associated with the CAA-level UAV ID and the location information of the terminal device.

Specifically, the NEF may determine a candidate authorization device based on the authorization device associated with the CAA-level UAV ID, and then use a candidate authorization device corresponding to the area in which the terminal device is located as the second authorization device, to determine the identification information of the second authorization device. The NEF may obtain the correspondences between the different authorization devices and the different areas from the first authorization device, a UDM device, or a UDR device.

S307: The NEF sends a second request message to the second authorization device.

The second request message is used to request to perform communication authorization on the terminal device, and may be specifically used to request the second authorization device to perform C2 communication authorization on the terminal device. The second request message may include at least one of the identification information of the second authorization device, the C2 aviation payload, and the identifier of the terminal device.

The NEF may obtain the C2 aviation payload and the identifier of the terminal device from the terminal device, or may obtain the foregoing information in another manner. This is not limited in this application.

The identifier, of the terminal device, included in the second request message may be the same as or different from the identifier, of the terminal device, included in the first request message in S302. If the identifier, of the terminal device, included in the second request message is different from the identifier, of the terminal device, included in the first request message, the identifier may be a CAA-level UAV ID allocated by the second authorization device to the terminal device. The identifier may be obtained by the NEF by requesting from the terminal device, or may be obtained in another manner. This is not limited in this application.

S308: The NEF receives second authorization information from the second authorization device.

The second authorization information indicates a result of communication authorization performed by the second authorization device on the terminal device, and the second authorization information may indicate that authorization succeeds or authorization fails. Correspondingly, the NEF determines the result of communication authorization performed by the second authorization device on the terminal device.

After the NEF receives the second authorization information from the second authorization device, the NEF stores the second authorization information, deletes the first authorization information and stores the second authorization information, or updates the first authorization information based on the second authorization information.

When the second authorization information indicates that authorization succeeds, the NEF may determine that authorization performed on the terminal device succeeds. Because both the first authorization information and the second authorization information indicate that authorization succeeds, the NEF may not need to further notify the SMF. In this case, a user plane session for C2 communication of the terminal device keeps unchanged, that is, the PDU session keeps unchanged. Optionally, the NEF may also forward the second authorization information to the SMF.

When the second authorization information indicates that authorization fails, the NEF may determine that authorization performed on the terminal device fails. When the second authorization information indicates that authorization fails, the NEF may send indication information to the SMF. The indication information may indicate that communication authorization performed by the second authorization device on the terminal device fails, or indicate the SMF to release the user plane session for the C2 communication of the terminal device, that is, release the PDU session, or the NEF may forward the second authorization information to the SMF. Correspondingly, when the SMF determines, based on the indication information or the second authorization information of the NEF, that C2 communication authorization performed on the terminal device fails or that the user plane session for the C2 communication of the terminal device needs to be released, the SMF may trigger release of the user plane session for the C2 communication of the terminal device. A specific process of releasing the user plane session is not limited in this application, and details are not described herein again.

In this application, when the core network device is the SMF, S306 to S308 may be replaced with the following steps.

S309: The NEF sends the first information to the SMF.

After obtaining the first information, the SMF may determine that communication authorization or C2 communication authorization needs to be re-performed on the terminal device.

Optionally, S310: The SMF obtains the identification information of the second authorization device.

If the first information indicates the identification information of the second authorization device, S310 may not be performed.

If the first information does not indicate the identification information of the second authorization device, the SMF may obtain the identification information of the second authorization device in any one of the following manners.

In a first implementation, the SMF may request the identification information of the second authorization device from the terminal device, to obtain the identification information of the second authorization device from the terminal device.

In a second implementation, the SMF obtains or preconfigures correspondences between different authorization devices and different areas (in other words, between identification information of the authorization device and information about an area corresponding to the authorization device). The SMF may request the location information of the terminal device from the mobility management device, and obtain the identification information of the second authorization device based on the location information of the terminal device and information about the area corresponding to the one or more authorization devices, where the one or more authorization devices include the second authorization device. Specifically, the SMF determines, based on the location information of the terminal device, an area in which the terminal device is located. In the area corresponding to the one or more authorization devices, if it is determined that the terminal device is located in the second area corresponding to the second authorization device, the SMF may determine the identification information of the second authorization device. The SMF may obtain the correspondences between the different authorization devices and the different areas from the first authorization device, the UDM device, or the UDR device.

In a third implementation, the SMF obtains or preconfigures correspondences between different authorization devices and different areas, and the SMF obtains the identifier (which may be obtained through S301 or obtained through the first information) of the terminal device. The identifier may be the CAA-level UAV ID of the terminal device, and the SMF obtains the location information of the terminal device from the mobility management device. The NEF may determine the identification information of the second authorization device based on an area corresponding to an authorization device associated with the CAA-level UAV ID and the location information of the terminal device.

Specifically, the SMF may determine a candidate authorization device based on the authorization device associated with the CAA-level UAV ID, and then use a candidate authorization device corresponding to an area in which the terminal device is located as the second authorization device, to determine the identification information of the second authorization device.

S311: The SMF sends the second request message to the second authorization device, where the second request message is used to request to perform communication authorization on the terminal device.

The second request message may include at least one of the identification information of the second authorization device, the C2 aviation payload, and the identifier of the terminal device.

This step may alternatively be replaced with that the SMF sends at least one of the following information to the second authorization device through the NEF: the identification information of the first authorization device; the C2 aviation payload; and the identifier of the terminal device.

The SMF may obtain the C2 aviation payload and the identifier of the terminal device from the terminal device, or may obtain the foregoing information in another manner. This is not limited in this application.

S312: The SMF receives the second authorization information from the second authorization device.

The SMF receives the second authorization information from the second authorization device through the NEF. Correspondingly, the SMF determines the result of communication authorization performed by the second authorization device on the terminal device.

Specifically, when the second authorization information indicates that authorization succeeds, the SMF may keep, based on the first authorization information, the session established for the terminal device, or keep the user plane session for the C2 communication of the terminal device unchanged, that is, keep the PDU session unchanged.

When the second authorization information indicates that authorization fails, the SMF may release, based on the first authorization information, the session established for the terminal device, or release the user plane session for the C2 communication of the terminal device, that is, release the PDU session. A specific process of releasing the user plane session is not limited in this application, and details are not described herein again.

According to the foregoing method, when determining that the terminal device moves out of the first area, the first authorization device may notify the core network device, so that the core network device requests the second authorization device to re-perform communication authorization on the terminal device, to ensure that authorization is performed on the terminal device for a plurality of times without interrupting communication, thereby improving system efficiency.

### Implementation 2

In Implementation 2 of this application, after authorization performed by a first authorization device on C2 communication of the terminal device succeeds, when the core network device determines that the terminal device moves from a first area corresponding to the first authorization device to a second area corresponding to the second authorization device, the core network device (the SMF or the NEF) may request the second authorization device to perform communication authorization on the terminal device. For details, refer to descriptions in the following procedure.

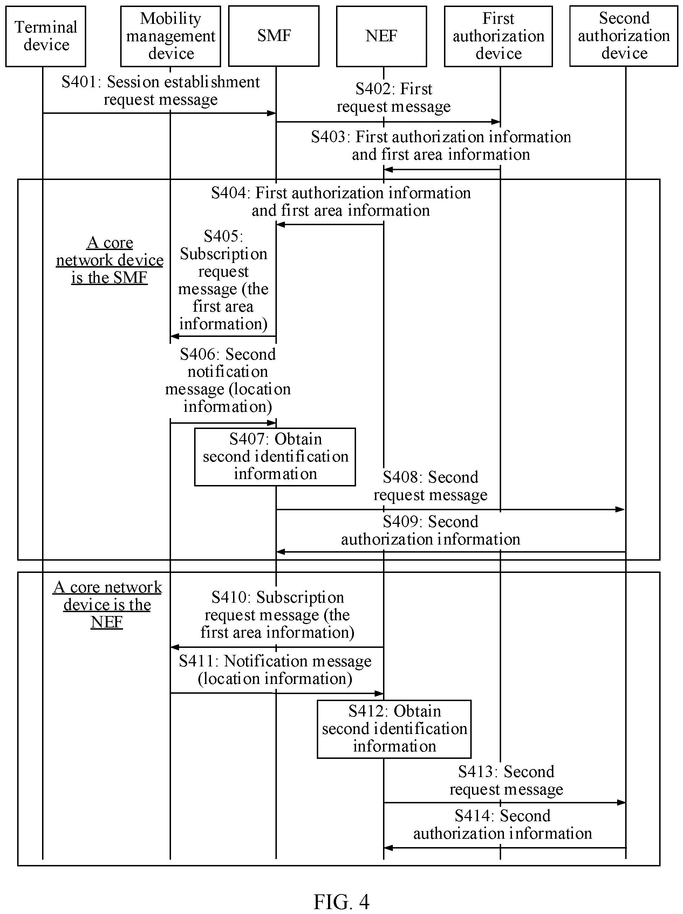

FIG. 4 is a schematic flowchart of an authorization method according to an embodiment of this application.

S401: A terminal device sends a session establishment request or a session modification request message to an SMF.

A session that the terminal device requests to establish or modify may be a PDU session.

S402: The SMF sends a first request message to a first authorization device.

For specific content of S401 and S402, refer to descriptions of S301 and S302. Details are not described herein again.

S403: The first authorization device sends first authorization information and information about a first area to an NEF.

The first authorization information indicates a result of communication authorization performed by the first authorization device on the terminal device, and the first authorization information may indicate that authorization succeeds or authorization fails. The information about the first area may indicate the first area corresponding to the first authorization device. Correspondingly, the NEF determines the result of communication authorization performed by the first authorization device on the terminal device.

The first authorization device may send the first authorization information and the information about the first area to the NEF through a first authorization response message.

Optionally, in S403, the first authorization information and the information about the first area may indicate: When the terminal device is located in the first area, the first authorization information is valid; or when the terminal device is located out of the first area, the first authorization information is invalid. Alternatively, the first authorization device indicates the foregoing content through other indication information.

Optionally, when the first authorization information indicates that authorization succeeds, the first authorization device sends the information about the first area to the NEF.

Optionally, when the first authorization device determines, based on moving route information of the terminal device, that a moving route of the terminal device passes through a second area corresponding to a second authorization device, the first authorization device may send identification information of the second authorization device to the NEF. The moving route information is included in the first request message in step S402.

Optionally, when the first authorization device determines, based on the moving route information of the terminal device, that the moving route of the terminal device passes through the second area corresponding to the second authorization device, the first authorization device sends the identification information of the second authorization device and information about the second area corresponding to the second authorization device to the NEF.

In this application, a core network device may be the NEF or the SMF. If the core network device is the SMF, and the first authorization information indicates that authorization succeeds, the following procedure is further included.

S404: The NEF forwards the first authorization information and the information about the first area to the SMF.

Optionally, when the first authorization device sends the identification information of the second authorization device to the NEF, the NEF further forwards the identification information of the second authorization device to the SMF. Correspondingly, the SMF determines the result of communication authorization performed by the first authorization device on the terminal device.

Optionally, when the first authorization device sends the identification information and the information about the second area of the second authorization device to the NEF, the NEF further sends the identification information and the information about the second area of the second authorization device to the SMF.

After obtaining the first authorization information, the SMF may perform communication authorization on the terminal device based on the first authorization information. Specifically, if the first authorization information indicates that authorization succeeds, the SMF establishes the PDU session for the terminal device, that is, establishes the session. A specific process is not limited in this application, and details are not described herein again. If the first authorization information indicates that authorization fails, the SMF may reject the establishment of the PDU session for the terminal device, that is, reject establishment of the session.

The first authorization information and the information about the first area may indicate: When the terminal device is located in the first area, the first authorization information is valid; or when the terminal device is located out of the first area, the first authorization information is invalid. Alternatively, the NEF indicates the foregoing content through other indication information.

Optionally, S405: The SMF sends a subscription request message to a mobility management device.

The subscription request message includes the information about the first area, and the subscription request message is used to request to subscribe to a notification indicating that the terminal device moves out of the first area corresponding to the first authorization device. When the terminal device moves out of the first area, the mobility management device performs the following procedure.

S406: The mobility management device sends a notification message to the SMF, where the notification message indicates that the terminal device moves out of the first area, and the notification message may further include location information of the terminal device.

Alternatively, the SMF may not send the subscription request message. When the terminal device moves out of the first area corresponding to the first authorization device, the mobility management device may actively send the notification message to the SMF.

S405 and S406 may be further replaced with the following steps.

Step 1: The SMF sends a subscription message to the mobility management device.

The subscription message is used to subscribe to the location information of the terminal device. Optionally, the subscription message may include periodicity information, and the periodicity information indicates a periodicity for the mobility management device to report the location information of the terminal device.

Step 2: The SMF receives the location information of the terminal device from the mobility management device, and determines, based on the location information of the terminal device and the information about the first area, whether the terminal device moves out of the first area.

In a first implementation, if the SMF receives the notification message, or the SMF determines, based on the location information of the terminal device and the information about the first area, that the terminal device moves out of the first area, the SMF may indicate, to the terminal device, that authorization fails, and release a user plane session for C2 communication, that is, release the PDU session. In this implementation, step S407 to step S409 may not be performed.

In a second implementation, the SMF determines, based on the notification message, that the terminal device moves out of the first area corresponding to the first authorization device, or the SMF determines, based on the location information of the terminal device and the information about the first area, that the terminal device moves out of the first area, to determine to re-perform communication authorization on the terminal device. In this implementation, assuming that the terminal device moves to the second area corresponding to the second authorization device, the SMF may further perform the following procedure.

Optionally, S407: The SMF obtains the identification information of the second authorization device.

The SMF may obtain the identification information of the second authorization device in any one of the following manners.

In a first implementation, the SMF obtains the identification information of the second authorization device through the terminal device, the first authorization device, or a UDM. For example, the SMF sends an identification information request message to the terminal device, the first authorization device, or the UDM, where the identification information request message includes the location information of the terminal device, and the identification information request message may be used to request identification information of an authorization device corresponding to an area including the location information. After receiving the identification information request message, the terminal device, the first authorization device, or the UDM may determine the identification information of the second authorization device based on the location information, to send the identification information of the second authorization device to the SMF.

In a second implementation, the SMF includes correspondences between different authorization devices and different areas (in other words, between identification information of the authorization device and information about an area corresponding to the authorization device). The SMF obtains the identification information of the second authorization device based on the location information of the terminal device and information about an area corresponding to one or more authorization devices, where the one or more authorization devices include the second authorization device. Specifically, the SMF determines, based on the location information of the terminal device, an area in which the terminal device is located. In the area corresponding to the one or more authorization devices, if it is determined that the terminal device is located in the second area corresponding to the second authorization device, the SMF may determine the identification information of the second authorization device. The SMF may obtain the correspondences between the different authorization devices and the different areas from the first authorization device, a UDM device, or a UDR device.

In a third implementation, in S404, the SMF receives the identification information of the second authorization device from the NEF. Further, the SMF may further receive the information about the second area of the second authorization device from the NEF.

In a fourth implementation, the SMF obtains or preconfigures the correspondences between the different authorization devices and the different areas, and the SMF obtains the identifier (which may be obtained through S401) of the terminal device. The identifier may be the CAA-level UAV ID of the terminal device, and the SMF obtains the location information of the terminal device from the mobility management device. The NEF may determine the identification information of the second authorization device based on an area corresponding to an authorization device associated with the CAA-level UAV ID and the location information of the terminal device.

Specifically, the SMF may determine a candidate authorization device based on the authorization device associated with the CAA-level UAV ID, and then use a candidate authorization device corresponding to an area in which the terminal device is located as the second authorization device, to determine the identification information of the second authorization device.

In this application, if the SMF cannot obtain the identification information of the second authorization device, the SMF may release the user plane session for the C2 communication of the terminal device, that is, release the PDU session.

S408: The SMF sends a second request message to the second authorization device, where the second request message is used to request to perform communication authorization on the terminal device.

S409: The SMF receives second authorization information from the second authorization device.

Specifically, the SMF may determine, based on the second authorization information, to keep or release a session established for the terminal device based on the first authorization information. Correspondingly, the SMF determines a result of communication authorization performed by the second authorization device on the terminal device.

For specific content of S408 and S409, refer to descriptions of S311 and S312. Details are not described herein again.

When the core network device is the NEF, and the first authorization information indicates that authorization succeeds, S405 to S409 may be replaced with the following steps.

Optionally, S410: The NEF sends the subscription request message to the mobility management device.

The subscription request message includes the information about the first area, and the subscription request message is used to request to subscribe to a notification indicating that the terminal device moves out of the first area corresponding to the first authorization device. When the terminal device moves out of the first area, the mobility management device performs the following procedure.

S411: The mobility management device sends the notification message to the NEF, where the notification message indicates that the terminal device moves out of the first area, and the notification message may further include the location information of the terminal device.

Alternatively, the SMF may not send the subscription request message. When the terminal device moves out of the first area corresponding to the first authorization device, the mobility management device may actively send the notification message to the SMF.

In another implementation, S410 and S411 may be replaced with the following steps.

Step 1: The NEF sends a subscription message to the mobility management device.

The subscription message is used to subscribe to the location information of the terminal device. Optionally, the subscription message may include periodicity information, and the periodicity information indicates a periodicity for the mobility management device to report the location information of the terminal device.

Step 2: The NEF receives the location information of the terminal device from the mobility management device, and determines, based on the location information of the terminal device and the information about the first area, whether the terminal device moves out of the first area.

The NEF may periodically obtain the location information of the terminal device from the mobility management device, and the NEF may determine, based on the location information of the terminal device and the information about the first area, whether the terminal device moves out of the first area.

The NEF determines, based on the notification message, that the terminal device moves out of the first area corresponding to the first authorization device, or the NEF may determine, based on the location information of the terminal device and the information about the first area, that the terminal device moves out of the first area, to determine to re-perform communication authorization on the terminal device. Assuming that the terminal device moves to the second area corresponding to the second authorization device, the NEF may further perform the following procedure.

S412: The NEF obtains the identification information of the second authorization device.

For details about how the NEF obtains the identification information of the second authorization device, refer to the description of S407. Details are not described herein again.

S413: The NEF sends the second request message to the second authorization device, where the second request message is used to request to perform communication authorization on the terminal device.

S414: The NEF receives the second authorization information from the second authorization device.

The second authorization information indicates the result of communication authorization performed by the second authorization device on the terminal device, and the second authorization information may indicate that authorization succeeds or authorization fails. Correspondingly, the NEF determines the result of communication authorization performed by the second authorization device on the terminal device.

After the NEF receives the second authorization information from the second authorization device, the NEF stores the second authorization information, deletes the first authorization information and stores the second authorization information, or updates the first authorization information based on the second authorization information.

When the second authorization information indicates that authorization succeeds, the NEF may determine that authorization performed on the terminal device succeeds. Because both the first authorization information and the second authorization information indicate that authorization succeeds, the NEF may not need to further notify the SMF. In this case, the user plane session for the C2 communication of the terminal device keeps unchanged, that is, the PDU session keeps unchanged. Optionally, the NEF may also forward the second authorization information to the SMF.

When the second authorization information indicates that authorization fails, the NEF may determine that authorization performed on the terminal device fails. When the second authorization information indicates that authorization fails, the NEF may send indication information to the SMF. The indication information may indicate that communication authorization performed by the second authorization device on the terminal device fails, or indicate the SMF to release the user plane session for the C2 communication of the terminal device, that is, release the PDU session, or the NEF may forward the second authorization information to the SMF. Correspondingly, when the SMF determines, based on the indication information or the second authorization information of the NEF, that C2 communication authorization performed on the terminal device fails or that the user plane session for the C2 communication of the terminal device needs to be released, the SMF may trigger release of the user plane session for the C2 communication of the terminal device. A specific process of releasing the user plane session is not limited in this application, and details are not described herein again.

For specific content of S412 to S414, refer to descriptions of S306 to S308. Details are not described herein again.

According to the foregoing method, when determining that the terminal device moves out of the first area, the core network device may request the second authorization device to re-perform communication authorization on the terminal device, to ensure that authorization is performed on the terminal device for a plurality of times without interrupting communication, thereby improving system efficiency.

### Implementation 3

In Implementation 3 of this application, in a process of establishing the user plane session, the core network device requests the first authorization device to perform authorization on the C2 communication of the terminal device. If the first authorization device determines that another authorization device is further needed to perform authorization, the first authorization device may indicate the core network device to request the another authorization device to perform communication authorization on the terminal device. For details, refer to descriptions in the following procedure.

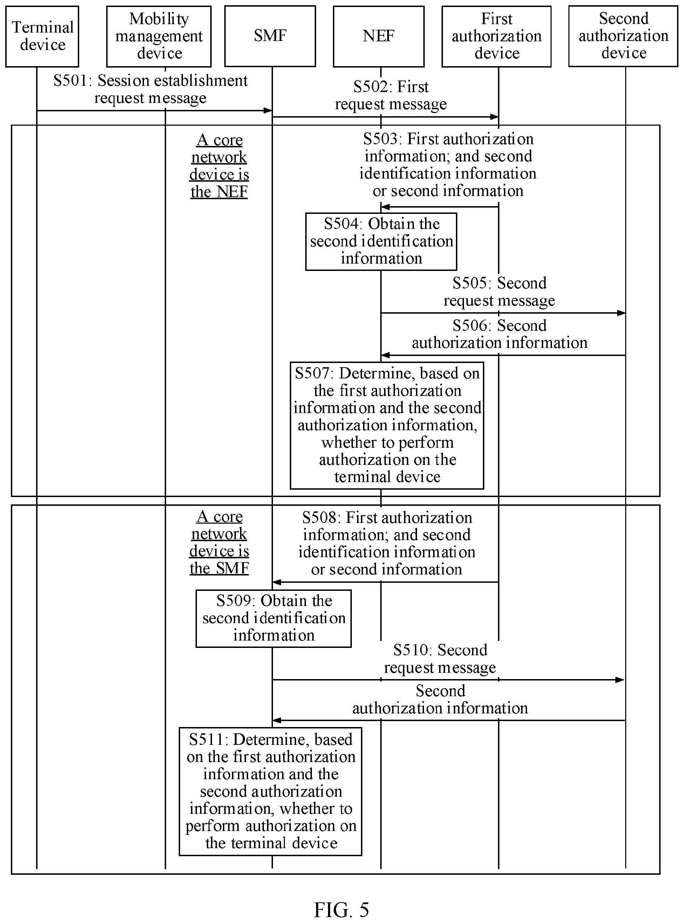

FIG. 5 is a schematic flowchart of an authorization method according to an embodiment of this application.

S501: A terminal device sends a session establishment request or a session modification request message to an SMF, where the session establishment request or the session modification request message may be used to request to establish a session.

A session that the terminal device requests to establish or modify may be a PDU session.

S502: The SMF sends a first request message to a first authorization device.

For specific content of S501 and S502, refer to descriptions of S301 and S302. Details are not described herein again.

In this application, a core network device may be an NEF or the SMF. If the first authorization device determines that authorization fails, the first authorization device may perform a procedure of rejecting establishment of a session with a device such as the SMF. A specific process is not described again.

If the first authorization device determines that authorization succeeds, that is, the first authorization device agrees to perform communication authorization on the terminal device, when the core network device is the NEF, the following procedure may be further included.

S503: The first authorization device sends first authorization information to the NEF.

The first authorization device may further send identification information of a second authorization device or first indication information to the NEF. Correspondingly, the NEF determines a result of communication authorization performed by the first authorization device on the terminal device.

When determining that authorization succeeds, the first authorization device may determine, based on moving route information of the terminal device, whether a moving route of the terminal device passes through an area corresponding to another authorization device. If the moving route of the terminal device passes through the area corresponding to the another authorization device (for example, an area corresponding to the second authorization device), the identification information of the second authorization device or the first indication information may be further sent. The first indication information indicates that the terminal device needs authorization from another authorization device, or the first indication information indicates that the first authorization device cannot independently perform communication authorization on the terminal device. The another authorization device herein may also be replaced with a plurality of authorization devices, and the plurality of authorization devices include the first authorization device and the second authorization device. The second authorization device is an authorization device corresponding to a second area that the moving route of the terminal device passes through and that is determined by the first authorization device based on the moving route information. The moving route information of the terminal device may further pass through areas corresponding to the plurality of authorization devices. In this application, only the second authorization device is used as an example for description.

When the core network device is the NEF, if the first authorization device does not send the identification information of the second authorization device to the NEF, but sends the first indication information, the NEF may obtain the identification information of the second authorization device. Specifically,

S504: The NEF obtains the identification information of the second authorization device based on the first indication information.

In a possible implementation, the NEF sends second indication information to the terminal device or a data management device based on the first indication information, and the NEF may receive the identification information of the second authorization device from the terminal device or the data management device. The data management device may be a device such as a UDM, and the second indication information is used to request identification information of an authorization device corresponding to an area that the moving route of the terminal device passes through.

In another possible implementation, the NEF sends the second indication information to the terminal device based on the first indication information, the NEF may receive the moving route information from the terminal device, and the NEF may determine, based on the moving route information of the terminal device, that the moving route of the terminal device passes through an area corresponding to one or more authorization devices, to determine identification information of the one or more authorization devices. In this application, an example in which the moving route of the terminal device passes through a first area corresponding to the first authorization device and a second area corresponding to the second authorization device is used for description, but the moving route of the terminal device is not limited to passing through only the first area and the second area.

The NEF may further obtain the identification information of the second authorization device in a manner in S306. A specific process is not described again.

S505: The NEF sends a second request message to the second authorization device, where the second request message is used to request to perform communication authorization on the terminal device.

Optionally, the NEF may further forward the first authorization information to the second authorization device.

For specific content of S505, refer to the description of S302 or S307. Details are not described herein again.

S506: The NEF receives the second authorization information from the second authorization device.

Correspondingly, the NEF determines a result of communication authorization performed by the second authorization device on the terminal device.

Optionally, if the NEF does not forward the first authorization information to the second authorization device, when determining that authorization succeeds, the second authorization device may determine, based on the moving route information of the terminal device, whether the moving route of the terminal device passes through the area corresponding to the another authorization device. If the moving route of the terminal device passes through the area corresponding to the another authorization device (for example, an area corresponding to the first authorization device), the identification information or the first indication information of the first authorization device may be further sent. The first indication information indicates that authorization needs to be performed by the plurality of authorization devices or the another authorization device on the terminal device, and the first authorization device is an authorization device corresponding to a first area that the moving route of the terminal device passes through and that is determined by the second authorization device based on the moving route information.

If the NEF forwards the first authorization information to the second authorization device, the second authorization device does not send identification information or the first indication information of the first authorization device.

S507: The NEF determines an authorization result based on the first authorization information and the second authorization information.

If the first authorization information indicates that authorization succeeds, and the second authorization information indicates that authorization succeeds, the NEF determines that the authorization result is that communication authorization performed on the terminal device succeeds. The NEF may send, to the SMF, information indicating that authorization performed on the terminal device succeeds, so that the SMF accepts the session establishment request or the session modification request message of the terminal device, or establishes the session for the terminal device, to establish a communication connection of C2 communication for the terminal device. A specific process is not described again.

If the first authorization information indicates that authorization fails, or the second authorization information indicates that authorization fails, the NEF determines that an authorization result is that communication authorization performed on the terminal device fails. The NEF may send, to the SMF, information indicating that authorization performed on the terminal device fails, so that the SMF rejects the session establishment request or the session modification request message of the terminal device, or rejects the establishment of the session for the terminal device. Therefore, the SMF does not establish the communication connection of the C2 communication for the terminal device. A specific process is not described again.

Optionally, the SMF may further send a session establishment response or a session modification response message to the terminal device, where the session establishment response or the session modification response message may include authorization result information, and the authorization result information indicates that establishment or modification of the session is accepted or rejected. For example, if the first authorization information indicates that authorization succeeds, and the second authorization information indicates that authorization succeeds, the authorization result information indicates that the establishment or the modification of the session is accepted. If the first authorization information indicates that authorization fails, or the second authorization information indicates that authorization fails, to be specific, if authorization performed by the first authorization device or the second authorization device on the terminal device fails, the authorization result information indicates that the establishment or the modification of the session is rejected, and/or indicates the identification information of the authorization device whose authorization on the terminal device fails. For example, if the second authorization information sent by the second authorization device indicates that authorization fails, the authorization result information may indicate that authorization performed by the second authorization device on the terminal device fails.

If the first authorization device determines that authorization succeeds, when the core network device is the SMF, S503 to S507 may be replaced with the following steps.

S508: The first authorization device sends the first authorization information and the identification information of the second authorization device or the first indication information to the SMF.

Correspondingly, the SMF determines the result of communication authorization performed by the first authorization device on the terminal device.

If the first authorization device does not send the identification information of the second authorization device, but sends the first indication information, the SMF may obtain the identification information of the second authorization device. Specifically,

S509: The SMF obtains the identification information of the second authorization device based on the first indication information.

The SMF may obtain the identification information of the second authorization device in a manner in S306 or S504. A specific process is not described again.

S510: The SMF sends the second request message to the second authorization device, where the second request message is used to request to perform communication authorization on the terminal device.

For specific content of S510, refer to the description of S302 or S311. Details are not described herein again.

S511: The SMF receives the second authorization information from the second authorization device, and determines an authorization result based on the first authorization information and the second authorization information.

Correspondingly, the SMF determines the result of communication authorization performed by the second authorization device on the terminal device.

If the first authorization information indicates that authorization succeeds, and the second authorization information indicates that authorization succeeds, the SMF determines that the authorization result is that communication authorization performed on the terminal device succeeds. The SMF may accept the session establishment request or the session modification request message of the terminal device, or establish the session for the terminal device, to establish the communication connection of the C2 communication for the terminal device. A specific process is not described again.

If the first authorization information indicates that authorization fails, or the second authorization information indicates that authorization fails, the SMF determines that the authorization result is that communication authorization performed on the terminal device fails. The SMF may reject the session establishment request or the session modification request message of the terminal device, or reject the establishment of the session for the terminal device. Therefore, the SMF does not establish the communication connection of the C2 communication for the terminal device. A specific process is not described again.

Optionally, the SMF may further send the session establishment response or the session modification response message to the terminal device, where the session establishment response or the session modification response message may include the authorization result information, and the authorization result information indicates that the establishment or the modification of the session is accepted or rejected. For example, if the first authorization information indicates that authorization succeeds, and the second authorization information indicates that authorization succeeds, the authorization result information indicates that the establishment or the modification of the session is accepted. If the first authorization information indicates that authorization fails, or the second authorization information indicates that authorization fails, to be specific, if authorization performed by the first authorization device or the second authorization device on the terminal device fails, the authorization result information indicates that the establishment or the modification of the session is rejected, and/or indicates the identification information of the authorization device whose authorization on the terminal device fails. For example, if the second authorization information sent by the second authorization device indicates that authorization fails, the authorization result information may indicate that authorization performed by the second authorization device on the terminal device fails.

According to the foregoing method, when the moving route of the terminal device passes through the areas corresponding to the plurality of authorization devices, the core network device may request the plurality of authorization devices to perform communication authorization on the terminal device, and when authorization performed by the plurality of authorization devices all succeeds, establish a session for the terminal device, so that authorization is performed on the terminal device for a plurality of times, thereby improving system efficiency.

### Implementation 4

In Implementation 4 of this application, the terminal device determines whether the terminal device passes through the areas corresponding to the plurality of authorization devices. If the terminal device passes through the areas corresponding to the plurality of authorization devices, the terminal device may request, through the core network device, the plurality of authorization devices to perform communication authorization when requesting to establish the session. For details, refer to descriptions in the following procedure.

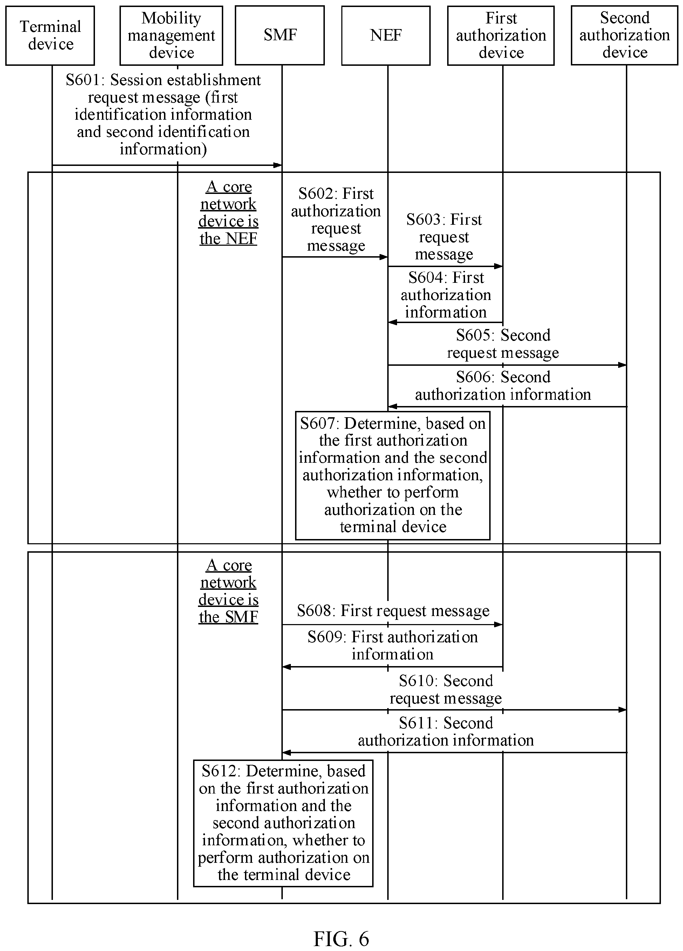

FIG. 6 is a schematic flowchart of an authorization method according to an embodiment of this application.

S601: A terminal device sends a session establishment request or a session modification request message to an SMF, where the session establishment request or the session modification request message may be used to request to establish a session.

A session that the terminal device requests to establish or modify may be a PDU session. An example in which a moving route of the terminal device passes through an area corresponding to a first authorization device and an area corresponding to a second authorization device is used, and the session establishment request or the session modification request message may include at least one of the following information:
identification information of the first authorization device and identification information of the second authorization device; a C2 aviation payload; and an identifier of the terminal device.

When the moving route of the terminal device passes through an area corresponding to another authorization device, the session establishment request or the session modification request message may include identification information of a corresponding authorization device. Details are not described herein again.

The terminal device preconfigures or obtains, from another network device, areas corresponding to a plurality of authorization devices. When determining, based on moving route information, that the moving route of the terminal device passes through an area corresponding to one or more authorization devices, the terminal device determines that authorization of the one or more authorization devices is needed, so that the terminal device may provide identification information of the one or more authorization devices for the SMF through a session establishment request message. In this application, an example in which the moving route of the terminal device passes through a first area corresponding to the first authorization device and a second area corresponding to the second authorization device is used for description, but the moving route of the terminal device is not limited to passing through only the first area and the second area.

When the identifier of the terminal device is a CAA-level UAV ID of the terminal device, the session establishment request or the session modification request message may include two CAA-level UAV IDs, for example, include a first CAA-level UAV ID and a second CAA-level UAV ID. The first CAA-level UAV ID may be allocated by the first authorization device to the terminal device, and the second CAA-level UAV ID may be allocated by the second authorization device to the terminal device.

In this application, a core network device may be an NEF or the SMF. Assuming that the core network device is the NEF, the following procedure is further included.

S602: The SMF sends a first authorization request message to the NEF.

The first authorization request message includes the C2 aviation payload, and the first authorization request message is used to request the first authorization device to perform communication authorization on the terminal device. The first authorization request message further includes the identification information of the first authorization device and the identification information of the second authorization device.

S603: The NEF sends a first request message to the first authorization device.

For specific content of S603, refer to the description of S302 or S307. Details are not described herein again.

S604: The NEF receives first authorization information from the first authorization device.

Correspondingly, the NEF determines a result of communication authorization performed by the first authorization device on the terminal device.

S605: The NEF sends a second request message to the second authorization device.

For specific content of S605, refer to the description of S302 or S307. Details are not described herein again.

S606: The NEF receives second authorization information from the second authorization device.

Correspondingly, the NEF determines a result of communication authorization performed by the second authorization device on the terminal device.

S607: The NEF determines an authorization result based on the first authorization information and the second authorization information.

For specific content of S607, refer to the description of S507. Details are not described herein again.

Assuming that the core network device is the SMF, S602 to S607 may be replaced with the following procedure.

S608: The SMF sends the first request message to the first authorization device through the NEF.

For specific content of S608, refer to the description of S302 or S311. Details are not described herein again.

S609: The SMF receives the first authorization information from the first authorization device through the NEF.

Correspondingly, the SMF determines the result of communication authorization performed by the first authorization device on the terminal device.

S610: The SMF sends the second request message to the second authorization device through the NEF.

For specific content of S610, refer to the description of S302 or S311. Details are not described herein again.

S611: The SMF receives the second authorization information from the second authorization device through the NEF.

Correspondingly, the SMF determines the result of communication authorization performed by the second authorization device on the terminal device.

S612: The SMF determines the authorization result based on the first authorization information and the second authorization information.

For specific content of S612, refer to the description of S511. Details are not described herein again.

According to the foregoing method, when determining that the moving route of the terminal device passes through the areas corresponding to the plurality of authorization devices, the terminal device may request the plurality of authorization devices to perform communication authorization on the terminal device, so that the terminal device requests, through one message, the plurality of authorization devices to perform communication authorization, to improve system efficiency.

In the foregoing embodiments provided in this application, the method provided in embodiments of this application is described from a perspective of interaction between devices. To implement the functions in the methods provided in embodiments of this application, the authorization device, the terminal device, or the core network device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

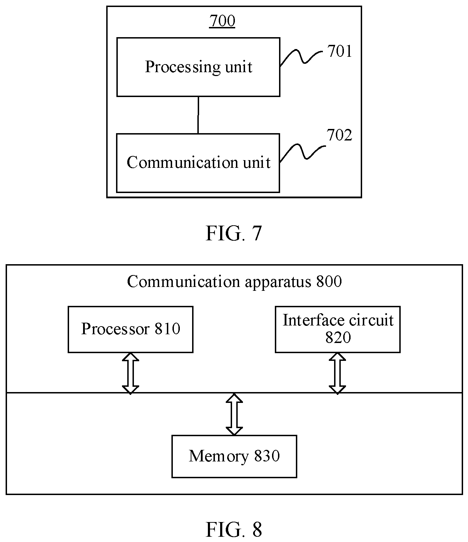

Same as the foregoing concept, as shown in FIG. 7, embodiments of this application further provide a communication apparatus 700, configured to implement a function of the authorization device, the terminal device, or the core network device in the foregoing method. For example, the communication apparatus may be a software module or a chip system. In embodiments of this application, the chip system may include a chip, or may include a chip and another discrete component. The communication apparatus 700 may include a processing unit 701 and a communication unit 702.

In embodiments of this application, the communication unit may also be referred to as a transceiver unit, and may include a sending unit and/or a receiving unit, respectively configured to perform the sending and receiving steps performed by the authorization device, the terminal device, or the core network device in the foregoing method embodiments.

The following describes in detail communication apparatuses provided in embodiments of this application with reference to FIG. 7 and FIG. 8. It should be understood that, descriptions of apparatus embodiments correspond to the descriptions of the method embodiments. Therefore, for content that is not described in detail, refer to the method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a device configured to implement the receiving function in the communication unit 702 may be considered as a receiving unit, and a device configured to implement the sending function in the communication unit 702 may be considered as a sending unit. In other words, the communication unit 702 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 700 performs a function of the core network device in the procedure shown in FIG. 3 or FIG. 4 in the foregoing embodiment,
the communication unit is configured to receive first authorization information from a first authorization device;
the processing unit is configured to determine, based on the first authorization information, that communication authorization performed by the first authorization device on the terminal device succeeds;
the communication unit is configured to send a request message to a second authorization device when the terminal device moves out of an area corresponding to the first authorization device, where the request message is used to request the second authorization device to perform communication authorization on the terminal device, and the second authorization device is an authorization device corresponding to an area in which the terminal device is located after the terminal device moves out of the area corresponding to the first authorization device; and receive second authorization information from the second authorization device; and
the processing unit is configured to determine, based on the second authorization information, of a result of communication authorization performed by the second authorization device on the terminal device.

When the communication apparatus 700 performs a function of the first authorization device in the procedure shown in FIG. 3 or FIG. 4 in the foregoing embodiment,
the communication unit is configured to send authorization information to a core network device, where the authorization information indicates a result of communication authorization performed by the first authorization device on a terminal device; and send first information to the core network device when the terminal device moves out of an area corresponding to the first authorization device, where the first information indicates to re-perform communication authorization on the terminal device.

When the communication apparatus 700 performs a function of the core network device in the procedure shown in FIG. 5 or FIG. 6 in the foregoing embodiment,
the communication unit is configured to: when a moving route of a terminal device passes through an area corresponding to a first authorization device and an area corresponding to a second authorization device, obtain identification information of the first authorization device; send a first request message to the first authorization device, where the first request message is used to request the first authorization device to perform communication authorization on the terminal device; obtain the identification information of the second authorization device; send a second request message to the second authorization device, where the first request message is used to request the second authorization device to perform communication authorization on the terminal device; and receive first authorization information from the first authorization device, and receiving second authorization information from the second authorization device, where the first authorization information indicates a result of communication authorization performed by the first authorization device on the terminal device, and the second authorization information indicates a result of communication authorization performed by the second authorization device on the terminal device; and
the processing unit is configured to determine an authorization result based on the first authorization information and the second authorization information.

When the communication apparatus 700 performs a function of the first authorization device in the procedure shown in FIG. 5 or FIG. 6 in the foregoing embodiment,
the communication unit is configured to: receive a request message from a core network device, where the request message is used to request to perform communication authorization on a terminal device, and the request message includes information about a moving route of the terminal device; and when the moving route of the terminal device passes through areas corresponding to a plurality of authorization devices, send authorization information and first indication information or identification information of a second authorization device in the plurality of authorization devices to the core network device, where the authorization information indicates a result of communication authorization performed by the first authorization device on the terminal device, and the first indication information indicates that the terminal device needs authorization from another authorization device or indicates that the first authorization device is incapable of independently performing communication authorization on the terminal device.

When the communication apparatus 700 performs a function of the terminal device in the procedure shown in FIG. 6 in the foregoing embodiment,
the processing unit is configured to determine that a moving route of the terminal device passes through an area corresponding to a first authorization device and an area corresponding to a second authorization device; and
the communication unit is configured to send a session establishment request message to a core network device, where the session establishment request message is used to request to establish a session for the terminal device, and the session establishment request message includes identification information of the first authorization device and identification information of the second authorization device.

The foregoing is merely an example. The processing unit 701 and the communication unit 702 may further perform other functions. For more detailed description, refer to related descriptions in the foregoing method embodiments. Details are not described herein again.

FIG. 8 is a communication apparatus 800 according to an embodiment of this application. The communication apparatus shown in FIG. 8 may be an implementation of a hardware circuit of the communication apparatus shown in FIG. 7. The communication apparatus is applicable to the foregoing flowcharts, and performs the functions of the authorization device, the terminal device, or the core network device in the foregoing method embodiments. For ease of description, FIG. 8 shows only main components of the communication apparatus.

As shown in FIG. 8, a communication apparatus 800 includes a processor 810 and an interface circuit 820. The processor 810 and the interface circuit 820 are coupled to each other. It may be understood that, the interface circuit 820 may be a transceiver, a pin, an interface circuit, or an input/output interface. Optionally, the communication apparatus 800 may further include a memory 830, configured to: store instructions executed by the processor 810, or store input data needed by the processor 810 to run the instructions, or store data generated after the processor 810 runs the instructions.

When the communication apparatus 800 is configured to implement the foregoing method, the processor 810 is configured to implement a function of the processing unit 701, and the interface circuit 820 is configured to implement a function of the communication unit 702.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general-purpose processor may be a microprocessor or any regular processor.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art should understand that, embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies in this application.

## Claims

1. An authorization method, comprising:
receiving first authorization information from a first authorization device, and determining that communication authorization performed by the first authorization device on a terminal device succeeds;
sending a request message to a second authorization device when the terminal device moves out of an area corresponding to the first authorization device, wherein the request message is used to request the second authorization device to perform communication authorization on the terminal device, and the second authorization device is an authorization device corresponding to an area in which the terminal device is located after the terminal device moves out of the area corresponding to the first authorization device; and
receiving second authorization information from the second authorization device, and determining a result of communication authorization performed by the second authorization device on the terminal device.

2. The method according to claim 1, wherein the method further comprises:
obtaining first information from the first authorization device, wherein the first information indicates to re-perform communication authorization on the terminal device; and
the sending a request message to a second authorization device comprises: sending the request message to the second authorization device based on the first information.

3. The method according to claim 2, wherein the first information is one or more of the following:
information indicating to change an authorization device, information indicating that authorization of the first authorization device is invalid, or identification information of the second authorization device.

4. The method according to claim 1, wherein the method further comprises:
determining that the terminal device moves out of the area corresponding to the first authorization device.

5. The method according to claim 4, wherein the determining that the terminal device moves out of the area corresponding to the first authorization device comprises:
obtaining location information of the terminal device; and
determining, based on the location information and the area corresponding to the first authorization device, that the terminal device moves out of the area corresponding to the first authorization device.

6. The method according to claim 5, wherein the determining that the terminal device moves out of the area corresponding to the first authorization device comprises:
sending a request message to a mobility management device, wherein the request message is used to request a notification that the terminal device moves out of the area corresponding to the first authorization device; and
receiving a notification message from the mobility management device, and determining, based on the notification message, that the terminal device moves out of the area corresponding to the first authorization device.

7. The method according to claim 5 or 6, wherein the method further comprises:
receiving information that is from the first authorization device and that is about the area corresponding to the first authorization device.

8. The method according to any one of claims 1 to 7, wherein before the sending a request message to a second authorization device, the method further comprises:
obtaining the identification information of the second authorization device.

9. The method according to claim 8, wherein the obtaining the identification information of the second authorization device comprises:
receiving the identification information of the second authorization device from the terminal device, the first authorization device, or a data management network element; or
obtaining the location information of the terminal device, and obtaining the identification information of the second authorization device based on the location information of the terminal device and information about an area corresponding to one or more authorization devices.

10. The method according to any one of claims 1 to 9, wherein the method is executed by a network exposure function device, and the method further comprises:
when the second authorization information indicates that authorization fails, sending, by the network exposure function device to a session management device, information indicating that communication authorization performed by the second authorization device on the terminal device fails.

11. The method according to any one of claims 1 to 9, wherein the method is executed by a session management device, and the method further comprises:
establishing a session for the terminal device based on the first authorization information.

12. The method according to claim 11, wherein the method further comprises:
when the second authorization information indicates that authorization fails, releasing the session established for the terminal device based on the first authorization information.

13. An authorization method, comprising:
sending, by a first authorization device, authorization information to a core network device, wherein the authorization information indicates a result of communication authorization performed by the first authorization device on a terminal device; and
sending first information to the core network device when the terminal device moves out of an area corresponding to the first authorization device, wherein the first information indicates to re-perform communication authorization on the terminal device.

14. The method according to claim 13, wherein the first information is one or more of the following:
information indicating to change an authorization device, information indicating that authorization of the first authorization device is invalid, or identification information of a second authorization device, wherein the second authorization device is an authorization device corresponding to an area in which the terminal device is located after the terminal device moves out of the area corresponding to the first authorization device.

15. The method according to claim 14, wherein when the first information is the identification information of the second authorization device, the method further comprises:
obtaining location information of the terminal device; and
obtaining the identification information of the second authorization device based on the location information of the terminal device and information about an area corresponding to one or more authorization devices.

16. The method according to any one of claims 13 to 15, wherein the method further comprises:
obtaining the location information of the terminal device; and determining, based on the location information and information about the area corresponding to the first authorization device, that the terminal device moves out of the area corresponding to the first authorization device; or
receiving a notification message from a mobility management device, and determining, based on the notification message, that the terminal device moves out of the area corresponding to the first authorization device.

17. The method according to claim 16, wherein before the sending first information to the core network device, the method further comprises:
determining that communication authorization performed on the terminal device succeeds.

18. An authorization method, comprising:
when a moving route of a terminal device passes through an area corresponding to a first authorization device and an area corresponding to a second authorization device, obtaining identification information of the first authorization device;
sending a first request message to the first authorization device, wherein the first request message is used to request the first authorization device to perform communication authorization on the terminal device;
obtaining identification information of the second authorization device;
sending a second request message to the second authorization device, wherein the first request message is used to request the second authorization device to perform communication authorization on the terminal device;
receiving first authorization information from the first authorization device, and receiving second authorization information from the second authorization device, wherein the first authorization information indicates a result of communication authorization performed by the first authorization device on the terminal device, and the second authorization information indicates a result of communication authorization performed by the second authorization device on the terminal device; and
learning of an authorization result based on the first authorization information and the second authorization information.

19. The method according to claim 18, wherein the identification information of the first authorization device and the identification information of the second authorization device are from the terminal device.

20. The method according to claim 18, wherein the obtaining identification information of the second authorization device comprises:
receiving the identification information of the second authorization device from the first authorization device.

21. The method according to claim 18 or 19, wherein the obtaining identification information of the second authorization device comprises:
receiving first indication information from the first authorization device, wherein the first indication information indicates that another authorization device is needed to perform communication authorization on the terminal device or indicates that the first authorization device is incapable of independently performing communication authorization on the terminal device; and
obtaining the identification information of the second authorization device based on the first indication information.

22. The method according to claim 21, wherein the obtaining the identification information of the second authorization device based on the first indication information comprises:
requesting identification information of the another authorization device from the terminal device or a data management device based on the first indication information; and
receiving the identification information of the second authorization device from the terminal device or the data management device.

23. The method according to any one of claims 18 to 22, wherein the learning of an authorization result based on the first authorization information and the second authorization information comprises:
determining that communication authorization performed on the terminal device succeeds, if the first authorization information indicates that authorization succeeds, and the second authorization information indicates that authorization succeeds; or
determining that communication authorization performed on the terminal device fails, if the first authorization information indicates that authorization fails, or the second authorization information indicates that authorization fails.

24. The method according to claim 23, wherein the determining that communication authorization performed on the terminal device succeeds comprises: accepting a session establishment request of the terminal device; and
the determining that communication authorization performed on the terminal device fails comprises: rejecting the session establishment request of the terminal device.

25. The method according to claim 23, wherein the method further comprises:
when determining that communication authorization performed on the terminal device succeeds, sending, to a session management network element, information indicating that authorization performed on the terminal device succeeds; or
when determining that authorization performed on the terminal device fails, sending, to a session management network element, information indicating that authorization performed on the terminal device fails.

26. The method according to any one of claims 23 to 25, comprising: when determining that authorization performed on the terminal device fails, sending, to the terminal device, identification information of an authorization device whose authorization on the terminal device fails.

27. An authorization method, comprising:
receiving, by a first authorization device, a request message from a core network device, wherein the request message is used to request to perform communication authorization on a terminal device, and the request message comprises information about a moving route of the terminal device; and
when the moving route passes through areas corresponding to a plurality of authorization devices, sending, by the first authorization device, authorization information and first indication information or identification information of a second authorization device in the plurality of authorization devices to the core network device, wherein
the authorization information indicates a result of communication authorization performed by the first authorization device on the terminal device, and the first indication information indicates that the terminal device needs authorization from another authorization device or indicates that the first authorization device is incapable of independently performing communication authorization on the terminal device.

28. The method according to claim 27, comprising: when the authorization information indicates that authorization succeeds, sending the first indication information or the identification information of the second authorization device to the core network device.

29. An authorization method, comprising:
determining, by a terminal device, that a moving route of the terminal device passes through an area corresponding to a first authorization device and an area corresponding to a second authorization device; and
sending, by the terminal device, a session establishment request message to a core network device, wherein the session establishment request message is used to request to establish a session for the terminal device, and the session establishment request message comprises identification information of the first authorization device and identification information of the second authorization device.

30. The method according to claim 29, wherein the method further comprises:
receiving, by the terminal device, authorization result information from the core network device if authorization performed by the first authorization device or the second authorization device on the terminal device fails, wherein the authorization result information indicates an authorization device whose communication authorization on the terminal device fails.

31. A communication apparatus, comprising a processor and a memory, wherein the processor is configured to execute a computer program or instructions stored in the memory, to enable the communication apparatus to implement the method according to any one of claims 1 to 12.

32. A communication apparatus, comprising a processor and a memory, wherein the processor is configured to execute a computer program or instructions stored in the memory, to enable the communication apparatus to implement the method according to any one of claims 13 to 17.

33. A communication apparatus, comprising a processor and a memory, wherein the processor is configured to execute a computer program or instructions stored in the memory, to enable the communication apparatus to implement the method according to any one of claims 18 to 26.

34. A communication apparatus, comprising a processor and a memory, wherein the processor is configured to execute a computer program or instructions stored in the memory, to enable the communication apparatus to implement the method according to either of claims 27 and 28.

35. A communication apparatus, comprising a processor and a memory, wherein the processor is configured to execute a computer program or instructions stored in the memory, to enable the communication apparatus to implement the method according to either of claims 29 and 30.

36. A computer-readable storage medium, storing a computer program or instructions, wherein when the computer program or the instructions are run on a computer, the computer is enabled to implement the method according to any one of claims 1 to 12, the computer is enabled to implement the method according to any one of claims 13 to 17, the computer is enabled to implement the method according to any one of claims 18 to 26, the computer is enabled to implement the method according to either of claims 27 and 28, or the computer is enabled to implement the method according to either of claims 29 and 30.

37. A computer program product, comprising a computer program or instructions, wherein when the computer program or the instructions are executed, the method according to any one of claims 1 to 12 is implemented, the method according to any one of claims 13 to 17 is implemented, the method according to any one of claims 18 to 26 is implemented, the method according to either of claims 27 and 28 is implemented, or the method according to either of claims 29 and 30 is implemented.

38. An authorization method, comprising:
receiving, by a core network device, first authorization information from a first authorization device, and determining that communication authorization performed by the first authorization device on a terminal device succeeds;
sending, by the core network device, a request message to a second authorization device when the terminal device moves out of an area corresponding to the first authorization device, wherein the request message is used to request the second authorization device to perform communication authorization on the terminal device, and the second authorization device is an authorization device corresponding to an area in which the terminal device is located after the terminal device moves out of the area corresponding to the first authorization device;
sending, by the second authorization device, second authorization information to the core network device; and
receiving, by the core network device, the second authorization information, and determining a result of communication authorization performed by the second authorization device on the terminal device.

39. A communication system, comprising a core network device and a second authorization device, wherein
the core network device is configured to: receive first authorization information from a first authorization device, and determine that communication authorization performed by the first authorization device on a terminal device succeeds; and send a request message to the second authorization device when the terminal device moves out of an area corresponding to the first authorization device, wherein the request message is used to request the second authorization device to perform communication authorization on the terminal device, and the second authorization device is an authorization device corresponding to an area in which the terminal device is located after the terminal device moves out of the area corresponding to the first authorization device;
the second authorization device is configured to send second authorization information to the core network device; and
the core network device is further configured to: receive the second authorization information, and determine a result of communication authorization performed by the second authorization device on the terminal device.
